# EUROPEAN PATENT APPLICATION

(11) **EP 1 768 402 A1**
(43) Date of publication of application: **28.03.2007**
(21) Application number: 06713886.7
(22) Date of filing: 16.02.2006
(51) Int. Cl.: H04N 5/91, G11B 20/10, G11B 20/12, G11B 27/034, H04N 5/92

(54) **DATA PROCESSOR**

(30) Priority: 18.02.2005 JP 2005041974
(71) Applicant: MATSUSHITA ELECTRIC INDUSTRIAL CO., LTD., Osaka 571-8501 (JP)
(72) Inventor: ITOH, Masanori Matsushita Elc.Ind.Co.Ltd, 1-chome Osaka 540-6319 (JP)
(74) Representative: Grünecker, Kinkeldey, Stockmair & Schwanhäusser Anwaltssozietät
(86) International application number: PCT/JP2006/002745
(87) International publication number: WO 2006/088100

(57) **Abstract**

To provide editing processing that can shorten a data stream editing processing time.

A data processor reads and writes content data from/on at least one unit area of a storage medium. A plurality of packets that store the content data are recorded on the unit area. The data processor includes: a reading section operable to read the packets; a control section operable to write the content data, which is stored in (n+1)th through (n+m)th packets (where n and m are integers that are equal to or greater than one), and storing the divided data on the first through (n + m)th packets; and a writing section operable to write a plurality of packets, including the first through (n+m)th packets, on the unit area.

## Description

### TECHNICAL FIELD

The present invention relates to a technique of editing a content that has been recorded on a medium.

### BACKGROUND ART

Recently, various types of digital appliances (such as optical disk recorders and camcorders) that can write and store digital data, representing a content, on a number of types of media including an optical disk such as a DVD, a magnetic disk such as a hard disk, and a semiconductor memory, have become more and more popular. The content may be a broadcast program or the video and audio that have been captured with a camcorder, for example.

Also, PCs often have the functions of recording, playing and editing a content lately, and may also be regarded as being included in those digital appliances. In writing data such as document data, PCs have used various media such as a hard disk, an optical disk and a semiconductor memory. That is why a file system that has a data management structure compatible with a PC such as a file allocation table (FAT) has been adopted in such media. The FAT 32 system that is often adopted currently can handle a file that may have a maximum size of 4 gigabytes or can manage a medium with a maximum storage capacity of 2 terabytes.

The bigger the maximum storage capacity of a medium, the longer the overall playback duration of the content stored there. The optical disks, hard disks, semiconductor memories and so on are so-called "randomly accessible" media. Therefore, when a data stream representing a content with a long duration is stored on such a medium, it would be convenient if playback could be started from any arbitrary point of the content.

For example, Patent Document No. 1 identified below generates time map information, defining correspondence between a playback time and the address at which the AV data to play back at the time is stored, at regular time intervals from the beginning of a data stream. If the start time and end time, specified by the user, are converted into a start address and an end address, respectively, by reference to the time map information and if the data stored at those addresses are read, the content can start being played back at the specified time.

Recently, some digital appliances have the function of editing a content that is stored on such a randomly accessible medium. This function is used not only to allow the user to search for his or her favorite part but also to leave some additional space for the medium by deleting unnecessary parts.

For example, while the user is shooting video outdoors using a camcorder, the medium sometimes comes to have much less space than expected. In such a situation, if unnecessary parts of the recorded content are deleted, sufficient space can be left. Then, a new content can be further stored on the same medium.

When editing such as partial deletion is done on a data stream, however, care should be taken of the relation between the structural unit of the data stream and the storage unit of the medium. Suppose the data stream is made up of packet units with a fixed length, whereas data should be written and managed on the medium on the basis of a logical block unit, of which the size is different from the packet length. When the data stream is partially deleted, a portion of the data should be deleted from a logical block unit. In that case, the packet arrangement of the data stream needs to be adjusted such that the packets can be included within the logical block unit.

For example, Patent Document No. 2 identified below discloses an example in which when a data stream is partially deleted, some packets of the data stream are stored in a logical block unit. More specifically, according to Patent Document No. 2, to adjust the data length of the packets to be left after the data stream has been deleted partially to the block length of the logical blocks, packets consisting of only dummy data (which are called "null packets") are inserted.
**Patent Document No. 1:** Japanese Patent Application Laid-Open Publication No. 11-155130
**Patent Document No. 2:** Pamphlet of PCT International Application Publication No. 01/004893 (see FIGS. **13** through **16**)

### DISCLOSURE OF INVENTION

### PROBLEMS TO BE SOLVED BY THE INVENTION

Such a method of inserting those null packets works fine in digital appliances that can detect and interpret the null packets but causes a trouble in digital appliances that cannot. More specifically, when a content is played back, the video to be played from around the null packets of the data stream is disturbed or may discontinue in a worst-case scenario. Such a phenomenon happens because the appliance will take the null packets and their dummy data for video data erroneously.

According to the MPEG standards that most of digital appliances are recently compliant with, the digital appliances need to decode video sequentially from the top of a playback unit called "group of pictures (GOP)". If there is dummy data at the top of a playback unit, however, the video data that follows cannot be decoded anymore and the playback discontinues.

To avoid inserting such dummy data, the data stream may be rewritten by moving up the data that follows the deleted data such that the edited data stream begins at the top of a logical block. This method is not appropriate, either, because in that case, data of as much as several gigabytes needs to be rewritten, which takes a huge amount of time. In rewriting a data stream, it takes a lot more time to delete a head portion of the data stream (front deletion) than to delete an intermediate portion thereof (partial deletion).

Optionally, it is not impossible to modify the data stream by intentionally increasing the data sizes of encoded video data and encoded audio data such that the edited data stream begins at the top of a logical block. However, such a method requires complicated processing to finely control the data sizes. On top of that, once the data sizes have been changed, system target decoder buffer simulations compliant with the ISO/IEC 13818-1 standard need to be carried out once again from the beginning of the data stream. That is to say, since the data stream needs to be modified entirely, this method is not appropriate, either.

An object of the present invention is to provide an apparatus and method that contributes to getting a data stream edited in a shorter time. A more specific object of the present invention is to provide an apparatus and method for getting editing processing done quickly without rewriting a data stream in a situation where the data stream is made up of packets with a fixed length and the size of the storage area allocated to the data stream is an integral number of times as great as the packet size of the fixed length.

### MEANS FOR SOLVING THE PROBLEMS

A data processor according to the present invention reads and writes content data from/on a storage medium on a unit area basis. A plurality of packets that store the content data are recorded on the unit area. The data processor includes: a reading section operable to read the packets; a control section operable to divide the content data, which is stored in (n┼1)th through (n┼m)th packets (where n and m are integers that are equal to or greater than one), and storing the divided data on the first through (n+ m)th packets; and a writing section operable to write multiple packets, including the first through (n + m)th packets, on the unit area.

The control section may store the divided content data on the first through (n+m)th packets sequentially.

The control section may sequentially store the divided content data on the second packet and so on. The second packet is next to the first packet.

If the (n┼1)th packet stores thereon management information for managing playback of a data stream, the control section may store the management information on the first packet.

The length of each said packet may be fixed at a predetermined length. In that case, the control section may store not only the content data but also padding data, which is different from the content data, on the at least one packet, thereby adjusting the length of the at least one packet to the predetermined length.

The control section may store the divided content data on at least two packets consisting of the first through (n+m)th packets.

The control section may generate at least one packet that does not include the padding data and at least one packet that does include the padding data.

Each said packet may store time information showing time at which the packet is processed. In that case, among the (n+1)th through (n┼m)th packets, the control section may get the time information of a pth packet, which is the first packet that stores the content data (and where p is an integer that satisfies n+1≦p≦n+m), change the time information to show another time at which a qth packet, which is the first packet that store the divided content data (and where q is an integer that satisfies 1≦q≦p-1), is processed, and then store the latter information on the qth packet.

The length of each said packet may be fixed at a predetermined length. In that case, the control section may change the time information based on the number of packets between the pth and the qth packets and on a data rate of the data stream.

Each said packet may store rate information showing the data rate of the data stream. In that case, the control section may change the time information based on the rate information in the pth packet.

The control section may change the time information based on the amount of time it takes to transfer a single packet, which is determined based on the rate information, and the number of packets.

### EFFECTS OF THE INVENTION

According to the present invention, when content data is edited using a device for reading and writing the content data from/on unit areas of a storage medium, the content data, which is stored in (n+1)th through (n+m)th packets (where n and m are integers that are equal to or greater than one) is divided, and the divided data is stored on the first through (n┼m)th packets. Then, the first through (n+m)th packets are recorded again on the unit area of the storage medium. As a result, the content data that was originally stored in the first through the nth packets is substantially deleted.

After the rewrite operation, no null packets consisting of dummy data are included in the unit area, and therefore, even a device that cannot deal with those null packets can interpret the content data and play back the content. As a result, the playback of a content is never disturbed or discontinued by the null packets in any type of device.

In addition, there is no need to rewrite the content data beyond the unit area, either. Nor is there any need to shift forward every data that follows by the amount of the deleted data. Consequently, the time it takes to get the editing processing done can be shortened significantly.

### BRIEF DESCRIPTION OF DRAWINGS

FIG. **1** shows a configuration for a recorder **10** according to a preferred embodiment of the present invention.
FIG. **2** shows the data structure of a data stream file **20.** Portion **(a)** of FIG. **3** shows a program stream **35** yet to be edited by the recorder **10** and portion **(b)** of FIG. **3** shows the program stream **36** that has been edited by the recorder **10.**
FIG. **4** shows the data structure of Video Pack #3 yet to be subjected to the deletion editing.
FIGS. **5(a), 5(b)** and **5(c)** show the respective data structures of Video Packs #1, #2 and #3 that have been subjected to the deletion editing.
FIG. **6** shows the correspondence among the program stream **35** yet to be subjected to the deletion editing processing, the arrangement of VOBUs, and the arrangement of clusters according to the FAT file system.
FIG. **7** shows the correspondence among the program stream **36** that has been subjected to the deletion editing processing, the arrangement of VOBUs, and the arrangement of clusters according to the FAT file system.
FIG. **8** is a flowchart showing the procedure of the deletion editing processing to be done by the recorder **10.**
FIG. **9** shows the hierarchical structure of the file system of the memory card **130.**
FIG. **10** shows an exemplary piece of management information for a program stream.
FIG. **11** shows correspondence among the arrangement of packs in a program stream **37,** in which each VOBU begins with an RDI pack, the arrangement of VOBUs, and the arrangement of clusters in an FAT file system.
FIG. **12** shows correspondence among a program stream **38** that has been subjected to deletion editing processing, the arrangement of VOBUs, and the arrangement of clusters in an FAT file system.

### DESCRIPTION OF REFERENCE NUMERALS

- **10**: recorder
- **100**: video signal input section
- **101**: video compression section
- **102**: audio signal input section
- **103**: audio compression section
- **104**: system encoding section
- **110**: video signal output section
- **111**: video expansion section
- **112**: audio signal output section
- **113**: audio expansion section
- **114**: system decoding section
- **120**: writing section
- **121**: reading section
- **130**: removable memory card
- **160**: continuous data area detecting section
- **161**: writing control section
- **162**: reading control section
- **163**: logical block management section
- **164**: editing control section
- **170**: MPEG encoder
- **171**: MPEG decoder
- **175**: media control section
- **180**: system control section
- **181**: CPU
- **182**: ROM
- **183**: RAM

### BEST MODE FOR CARRYING OUT THE INVENTION

Hereinafter, a preferred embodiment of a data processor according to the present invention will be described with reference to the accompanying drawings.

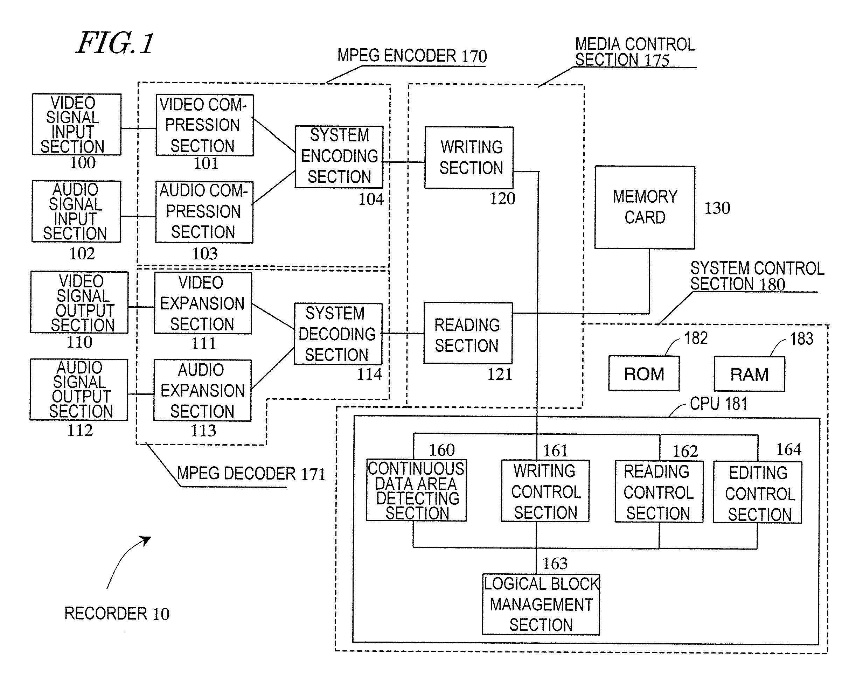

FIG. **1** illustrates a configuration for a recorder **10** according to this preferred embodiment. The recorder has the function of writing a data stream representing moving pictures with video and audio (which will be referred to herein as a "moving picture stream") on a memory card **130** (which will be referred to herein as a "recording function"). The recorder **10** also has the function of reading the moving picture stream from the memory card **130** and playing back the moving pictures (which will be referred to herein as a "playback function"). And the recorder **10** further has the function of editing the moving picture stream that has been written on the memory card **130** and then read therefrom (which will be referred to herein as an "editing function"). The recorder **10** may be a portable camcorder or a fixed recorder for recording TV programs, for example.

Hereinafter, the respective components of the recorder **10** will be described one by one. The recorder **10** includes a video signal input section **100,** an audio signal input section **102,** a video display section **110,** an audio output section **112,** an MPEG encoder **170,** an MPEG decoder **171,** a media control section **175,** a system control section **180** and a CPU **181.**

A memory card **130** is inserted in a removable state into the recorder **10** and moving pictures can be recorded on the memory card **130.** It should be noted that the memory card **130** is not an essential component of the recorder **10.**

The memory card **130** is supposed herein to have been formatted by an FAT (FAT 16 or FAT 32) file system, which is generally used in PCs. In the memory card **130,** the data size of a logical block (cluster), which is an available area management unit and an area reading/writing unit, is defined by the storage capacity of the memory card. For example, if the storage capacity of the memory card is 1 GB or less, the data size of each cluster is supposed to be 16 KB. On the other hand, if the storage capacity of the memory card exceeds 1 GB, the data size of each cluster is supposed to be 32 KB or more. If a cluster has a size of 16 KB, then the cluster is made up of 32 sectors. On the other hand, if a cluster has a size of 32 KB, then the cluster is made up of 64 sectors.

The video signal input section **100** may be a CCD camera or a video input terminal (not shown) that is connected to an antenna (not shown), for example. The audio signal input section **102** may be a microphone or an audio input terminal (not shown) that is connected to an antenna (not shown), for example.

The MPEG encoder **170** (which will be simply referred to herein as an "encoder **170**") includes a video compression section **101,** an audio compression section **103** and a system encoding section **104.** The video compression section **101** receives a video signal from the video signal input section **100** and compresses and encodes the signal compliant with an MPEG standard. The audio compression section **103** receives a video signal from the audio signal input section **102** and (compresses and) encodes the signal compliant with an MPEG standard. As a result, video data and audio data are output.

The system encoding section **104** interleaves the video data and the audio data with each other, thereby generating a moving picture stream. More specifically, the system encoding section **104** makes packets that store video data and packets that store audio data and arranges those packets to generate a moving picture stream. In this case, other types of data (such as character data and management information) may also be packetized and the resultant packets may also be arranged as portions of the moving picture stream.

The media control section **175** includes a writing section **120** and a reading section **121,** which respectively control writing and reading of a moving picture stream on/from the memory card **130.**

The other components of the recorder **10** will be described. The MPEG decoder **170** (which will be simply referred to herein as a "decoder **171**") includes a video expansion section **111,** an audio expansion section **113,** and a system encoding section **114.** The operations of these components will be described in the order of processing. Specifically, the system encoding section **114** splits the moving picture stream (i.e., a program stream) according to the types of the packets and sends the packets including video data to the video expansion section **111** and the packets including audio data to the audio expansion section **113,** respectively. The video expansion section **111** expands the video data compliant with the MPEG standard and passes the expanded data to the video signal output section **110.** The audio expansion section **113** expands the audio data compliant with the MPEG standard, for example, and passes the expanded data to the audio signal output section **112.**

The video signal output section **110** may be a liquid crystal display screen if the recorder **10** is a camcorder and may be a video signal output terminal if the recorder **10** is a fixed recorder. The audio signal output section **112** may be a loudspeaker or an audio signal output terminal, for example.

The system control section **180** includes a CPU **181,** a ROM **182** and a RAM **183.** The CPU **181** may read a computer program from the ROM **182,** extend the program on the RAM **183** and get it executed, thereby realizing various functions. The CPU **181** may function as a continuous data area detecting section **160,** a writing control section **161,** a reading control section **162,** a logical block management section **163** and an editing control section **164,** for example. In the following description, these functions realized by the CPU **181** will be regarded as independent hardware components. The exchange of data between these components corresponds to the exchange of the data between programs.

In recording moving pictures, the writing control section **161** instructs the continuous data area detecting section **160** to look for a continuous available area of 4 MB, for example, before starting to record a program stream. By reference to the FAT information about the available area that has been read in advance, the continuous data area detecting section **160** searches for a continuous available area. Then, the writing control section **161** instructs the writing section **120** to start recording the program stream on the available area detected. And until the writing section **120** finishes writing the program stream on the single continuous available area, the continuous data area detecting section **160** continues searching for another continuous available area and continues recording the program stream. Also, at regular time intervals (of 10 seconds, for example), the writing control section **161** writes management data for the program stream.

On the other hand, in playing back moving pictures, when the user selects a content to play back, the reading control section **162** instructs the reading section **121** to read the management information of a data stream, corresponding to the content, from a management file and then read a program stream from the memory card **130** by reference to the address information described on the management file.

In editing moving pictures, the editing control section **164** receives an instruction to delete a portion of a recorded content, for example, from the user. In this case, the editing control section **164** instructs the reading section **121** to read data to be edited. The data to be edited is read on the basis of a logical block of the memory card **130.**

The editing control section **164** finds a portion to delete from the read data and deletes that portion. Then, the editing control section **164** instructs the writing section 120 to adjust the data size of the non-deleted data in the pack by subjecting the data to the processing to be described later and to arrange the video packs from the beginning of the cluster in the memory card **130.**

In this preferred embodiment, the moving picture stream generated by the encoder **170** and written on the memory card **130** by the media control section **175** is supposed to be a program stream that complies with the MPEG-2 standard. The program stream consists of fixed-length data units called "packs", which are known as an exemplary form of packets.

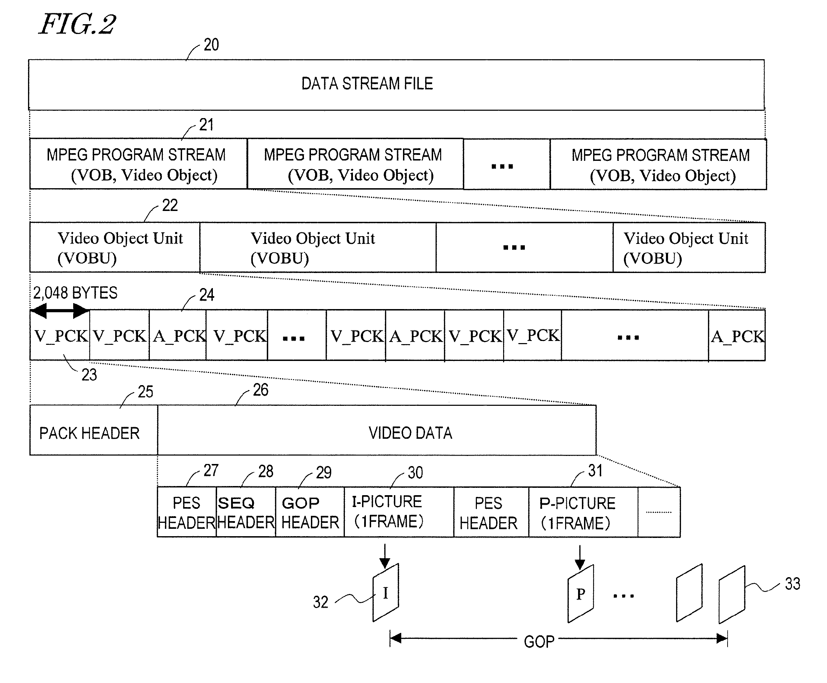

Hereinafter, a program stream will be described with reference to FIG. **2.** The program stream written on the memory card **130** is managed as a data stream file. FIG. **2** shows the data structure of a data stream file **20.** The data structure to be described below is supposed to be compliant with the DVD Video Recording standard for recording moving pictures on the memory card **130** such as an SD memory card or on an optical disk such as a DVD-RAM or a DVD-RW.

The data stream file **20** includes a plurality of video objects (VOBs) such as an MPEG program stream **21.** And each VOB consists of more than one video object unit (VOBU).

Each VOBU consists of a plurality of packs, each of which has a size of 2,048 bytes, forms the low-order layer of the MPEG program stream, and includes an amount of data corresponding to a video playback duration of 0.4 to 1 second.

Take the VOBU **22** as an example. The VOBU **22** includes two types of packs, i.e., video packs (V_PCK) **23** in which compressed video data are stored and audio packs (A_PCK) **24** in which compressed audio data are stored. If the video data is played back from all video packs V_PCK **23** in the VOBU **22,** that is the video with a duration of 0.4 to 1 second as described above. On the other hand, the audio data in the VOBU **22** is used to decode respective audio frames. The data of one audio frame is never stored across any VOBU boundary.

Optionally, a real time data information pack (RDI_PCK) may be recorded at the top of each VOBU. If necessary, management information for managing playback (such as letterbox information) may be stored in the RDI pack.

The program stream of this preferred embodiment is supposed to include no other type of packs but those described above. Also, a PES packet storing at least one byte of video data or audio data is supposed to be included in each video pack and in each audio pack. A PES packet including no greater than one padding stream may be included in a single video pack or in a single audio pack. This PES packet is provided to adjust the pack length to 2,048 bytes and includes a PES header, indicating that a padding stream is included, and the padding stream.

In the program stream **21**, stored are various types of time information including a system clock reference (SCR) and video and audio decoding time stamps (DTS) and presentation time stamps (PTS). The system clock reference (SCR) is used to set a reference value for the STC register of a player. A sync signal (STC) is generated based on this reference value. At a time when the value of the sync signal (STC) agrees with that of the decoding time stamp (DTS), the video and audio are decoded. And at a time when the value of the sync signal (STC) agrees with that of the presentation time stamp (PTS), the video and audio are output. In this preferred embodiment, the system clock reference (SCR), video decoding time stamp (DTS) and video presentation time stamp (PTS) in a single continuous program stream (VOB) are supposed to have values that change continuously in predetermined periods.

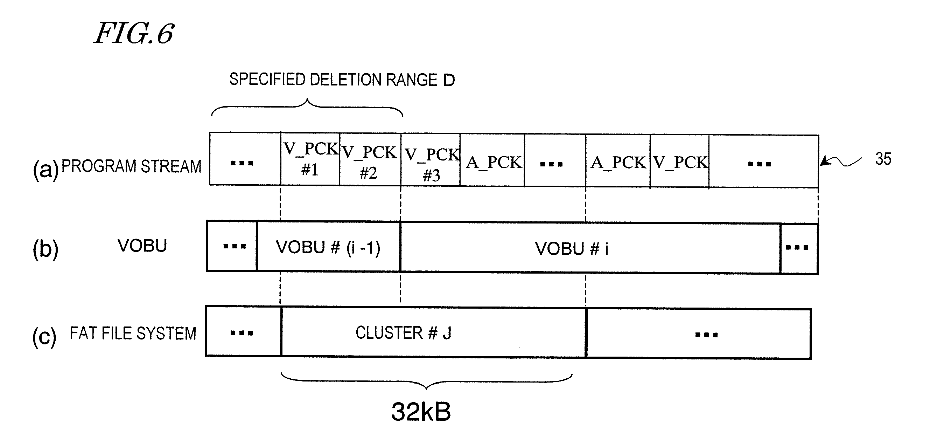

The first video pack **23** of each VOBU includes a pack header **25** and pack data (video data) **26.** The video data **26** further includes a sequence header **28,** a GOP header **29** and compressed I-picture data **30.** In FIG. **5,** a PES header and P-picture frame data **31** are also shown.

It should be noted that the data size of I-picture data is usually big and may sometimes be way over 2,048 bytes. That is why sometimes only a portion (e.g., the top) of the I-picture data is stored in the video data **26.**

A number of pictures from the I-picture **32** through a picture **33** form a single group of pictures (GOP). The GOP is a presentation unit consisting of a plurality of video frames that start with the I-picture **32** (i.e., a video frame that can be presented by itself) and end with the picture **33** (that is immediately before the next I-picture) and that include P-pictures and/or B-pictures.

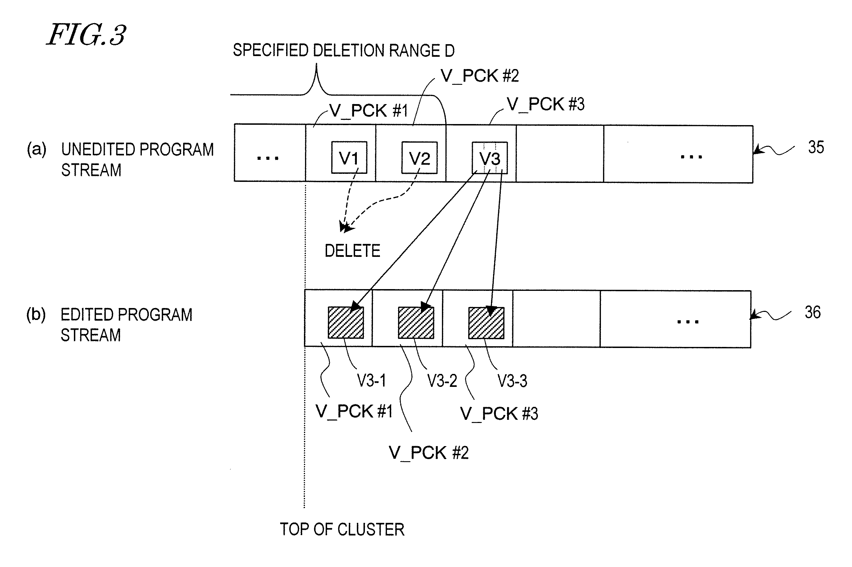

Next, the characteristic processing done by the recorder **10** of this preferred embodiment will be described with reference to FIGS. **3** through **5.**

Portion **(a)** of FIG. **3** shows a program stream **35** yet to be edited by the recorder **10** and portion **(b)** of FIG. **3** shows the program stream **36** that has been edited by the recorder **10.** To make this characteristic easily understandable, only video packs are shown in portions **(a)** and **(b)** of FIG. **3.**

First, referring to portion **(a)** of FIG. **3,** the respective packs forming the program stream **35** are supposed to include no null packets in which only dummy data is stored.

Suppose the user has instructed that a moving picture be deleted from the top thereof through his or her specified scene. Then, a portion of the program stream **35,** including the data from the top of the stream through that scene, is specified as a deletion range **D.** This deletion range **D** is supposed to cover a plurality of clusters. Also, Video Packs #1, #2, #3 and so on are supposed to be arranged in this order from the beginning of the last cluster and the deletion range **D** is supposed to end at Video Pack #2.

The recorder **10** of this preferred embodiment is partly characterized in that in the last cluster, the video data **V1** and **V2** in Video Packs #1 and #2 are deleted and the video data **V3** in Video Pack #3, which is arranged after the deletion range **D,** is divided into three portions, thereby generating Video Packs #1 and #2 in which two of the three divided portions are stored as new video data. The rest of the original video data is left in Video Pack #3.

Next, referring to portion **(b)** of FIG. **3,** it can be seen that the video data **V3** that was stored in Video Pack #3 has been divided into video data **V3-1, V3-2** and **V3-3,** which are now stored in Video Pack #1 at the top of the cluster, the next Video Pack #2 and Video Pack #3, respectively. To adjust the data sizes of the respective packs, dummy data (such as stuffing bytes or padding stream) is used.

The edited cluster includes no null packets consisting of dummy data only but uses just a padding stream, which is permitted by the MPEG standards. That is why any device can play back the video without being subjected to any disturbance as long as the device is compliant with the MPEG standards.

Besides, since the content data need not be rewritten beyond the given unit area, there is no need to shift every data that follows forward by the amount of data deleted. Thus, compared to the situation where all data needs to be shifted, the editing processing can get done in a much shorter time.

The processing of deleting the video data **V1** and **V2** may be carried out either by deleting these data actually and then storing the video data **V3-1** and **V3-2** in Video Packs #1 and #2, respectively, or by overwriting the video data **V3-1** and **V3-2** on the video data **V1** and **V2** in Video Packs #1 and #2, respectively.

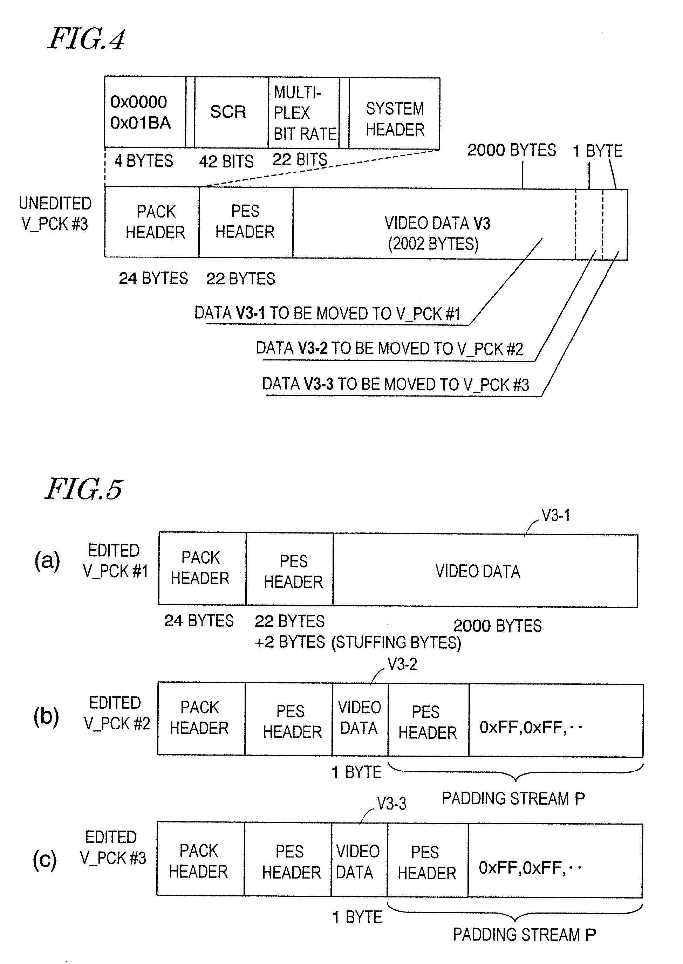

Next, Video Pack #3 before the deletion editing and Video Packs #1 through #3 after the deletion editing will be described in more detail with reference to FIGS. **4** and **5.**

FIG. **4** shows the data structure of Video Pack #3 yet to be subjected to the deletion editing. The unedited video data **V3** has a size of 2,002 bytes.

After having specified the deletion range **D,** the recorder **10** divides the video data **V3** into video data **3-1** of 2,000 bytes, video data **V3-2** of 1 byte, and video data **V3-3** of 1 byte. The video data **V3-1** is moved to Video Pack #1, the data **V3-2** is moved to Video Pack #2, and the video data **V3-3** is left in Video Pack #3. It should be noted that the pack header has a size of 24 bytes and the PES header has a size of 22 bytes. The pack header, PES header and video data **V3** has a combined data size of 2,048 bytes.

Pack start codes (0x0000 and 0x01BA), an SCR (system clock reference) field, a multiplex bit rate (Program Mux Rate) field, a system header and so on are included in the pack header.

FIGS. **5(a), 5(b)** and **5(c)** show the respective data structures of Video Packs #1, #2 and #3 that have been subjected to the deletion editing. In Video Pack #1 shown in FIG. **5(a),** the video data **V3-1** of 2,000 bytes is stored. Even so, the pack header and the PES header both have a data size of 24 bytes.

The DVD video Recording standard permits adding stuffing bytes to the PES header to adjust the data size of a pack. The stuffing bytes serve as predetermined dummy data. And byte data such as "0xFF" (which is a hexadecimal representation) is defined in advance as a meaningless value for the stuffing bytes.

In this preferred embodiment, the data sizes of the pack, the pack header and the video data **V3-1** are defined as 2,048 bytes, 24 bytes and 2,000 bytes, respectively, and therefore, the data size of the PES header should be 24 bytes. Thus, to adjust the pack length to 2,048 bytes, stuffing bytes of 2 bytes are added to the original PES header of 22 bytes.

Each of Video Packs #2 and #3 shown in FIGS. **5(b)** and **5(c)** includes two PES packets. As used herein, the "PES packet" consists of a PES header and data that follows the header.

For example, video data **V3-2** of 1 byte is stored in the first PES packet of Video Pack #2 and a padding stream **P** is stored in the second PES packet, thereby adjusting the pack length. Just like the staffing bytes, byte data such as "0xFF" (which is a hexadecimal representation) is defined as a meaningless value for the padding data. The difference between Video Packs #2 and #3 lies in only video data value and SCR value.

The pack size of Video Pack #1 shown in FIG. **5(a)** is adjusted with the staffing bytes, while the pack sizes of Video Packs #2 and #3 shown in FIGS. **5(b)** and **5(c)** are adjusted with the padding stream **P.** This is because the standard defines the maximum permissible size that can be adjusted with staffing bytes (e.g., 7 bytes or less). Thus, according to the maximum permissible adjustable size, the pack size may sometimes be non-adjustable just by inserting staffing bytes. Also, some standards may prohibit providing staffing bytes and a padding stream for the same pack. In those cases, if the size to be adjusted is greater than the maximum permissible size, then the pack length may be adjusted with the padding stream, not the staffing bytes. In this preferred embodiment, if the size to be adjusted is 8 bytes or more (e.g., 1 kB), then the second PES header is supposed to be recorded and the padding stream **P** is supposed to be provided so as to begin with the header.

Each PES header has its own stream ID, the type of which changes with the type of the data that follows the header. A video stream ID (e.g., 0xE0) is added to the PES header of a video stream, while an audio stream ID (e.g., 0xE1) is added to the PES header of an audio stream. These IDs have mutually different values. Also, according to this preferred embodiment, an ID (such as 0xBE), which is different from the video and audio stream IDs, is defined for the PES header of the padding stream **P**.

The video data stored in Video Packs #2 and #3 are supposed to have a size of 1 byte. However, this is just an example. Alternatively, the video data may have a size of 10 bytes or 1 kilobyte. Or Video Packs #2 and #3 may have respectively different video data sizes. And according to those values, either staffing bytes or a padding stream may be used to adjust the pack length.

As to the deletion editing processing, it should also be noted that the SCR value should be changed, too. As in the data structure of the pack header shown in FIG. **4**, an SCR value is added to each pack header. For example, an SCR value that is supposed to be read after Video Packs #1 and #2 is set for the video data in Video Pack #3 yet to be subjected to the deletion editing. In performing the deletion editing processing, the recorder **10** sets an SCR value, which is earlier than the SCR value defined for Video Pack #3 yet to be subjected to the deletion editing by the amount of time it takes to transfer data of two packs, for the pack header of Video Pack #1. As a result, the operation reference time during the playback operation can be accelerated by the amount of time it takes to transfer data of two packs.

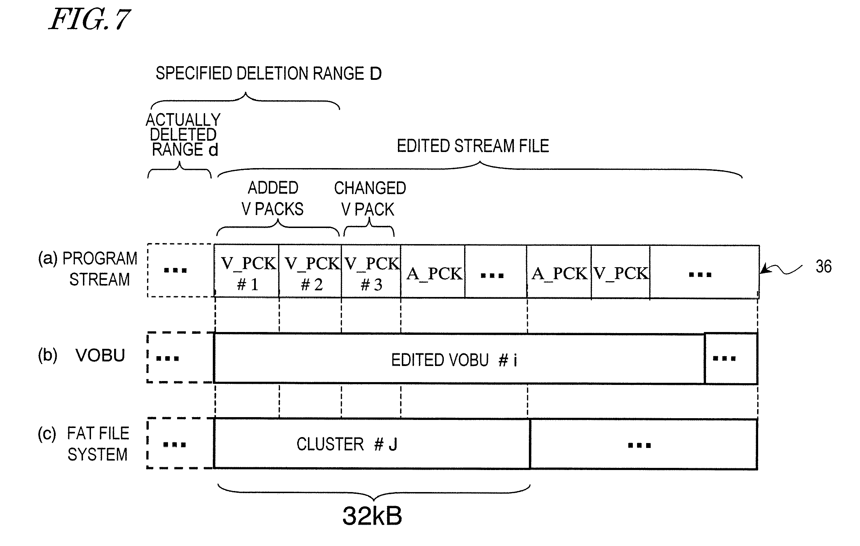

Next, it will be described with reference to FIGS. **6** and **7** how the correlation among the program stream, VOBUs and clusters changes before and after the deletion editing.

FIG. **6** shows the correspondence among the program stream **35** yet to be subjected to the deletion editing processing, the arrangement of VOBUs, and the arrangement of clusters according to the FAT file system. Specifically, portion **(a)** of FIG. **6** shows the structure of the program stream **35** yet to be subjected to the deletion editing, portion **(b)** of FIG. **6** shows the arrangement of VOBUs, and portion **(c)** of FIG. **6** shows the arrangement of clusters according to the FAT file system.

The deletion range **D** specified by the user is supposed to include a series of packs that ends with Video Pack (V_PCK) #2 and to stretch from the top of a particular VOB through VOBU #(i-1). Thus, when the deletion processing is finished, data that has been stored from VOBU #i through the end of the VOB will be left. From Cluster #J managed by the FAT file system, two V_PCK (with a combined size of 4 kB) are deleted.

Since Video Pack #3 is the first pack of VOBU #i, its video data includes a sequence header, a GOP header and I-picture data as shown in FIG. **2.**

FIG. **7** shows the correspondence among the program stream **36** that has been subjected to the deletion editing processing, the arrangement of VOBUs, and the arrangement of clusters according to the FAT file system. Specifically, portion **(a)** of FIG. **7** shows the structure of the program stream **36** that has been subjected to the deletion editing, portion **(b)** of FIG. **7** shows the arrangement of VOBUs, and portion **(c)** of **FIG. 7** shows the arrangement of clusters according to the FAT file system.

The data structures of Video Packs #1 through #3 of the program stream **36** are as shown in portions **(a), (b)** and **(c)** of FIG. **5.** The original Video Packs #1 and #2 have been deleted once, and then portions of the video data that was stored in Video Pack #3 before subjected to the editing processing are newly stored in those packs. In FIG. **7,** Video Packs #1 and #2 are shown as "added V packs".

On the other hand, the data that was arranged before Video Pack #1, i.e., in the clusters that preceded Cluster #J, has been deleted completely and permanently. As a result of the deletion editing processing, the original VOBU #i is now located at the top of Cluster #J.

It should be noted that the packs that follow Video Pack #3 in Cluster #J do not change even after having been subjected to the editing processing. In this preferred embodiment, there is no need to move up the data of the program stream that follows so as to fill the specified range **D.** Thus, compared to the situation where the data needs to be moved up, the processing can be done much more quickly.

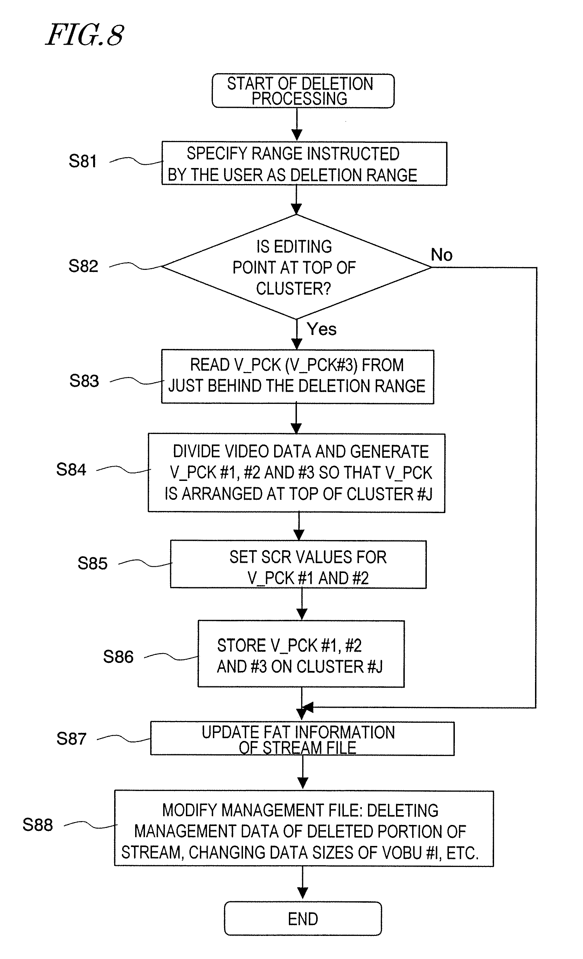

Hereinafter, the procedure of such processing to be done by the recorder **10** will be described with reference to FIG. **8,** which shows the procedure of the deletion editing processing to be done by the recorder **10.** The processing to be described below is carried out mainly by the overall system control section **180** shown in FIG. **1,** more particularly by the CPU **181.** In the following description, however, the processing is supposed to be carried out by functional components, which are actually implemented by the CPU **181.**

In Step **S81,** the editing control section **164** presents an editing mode screen to the user, receives his or her instruction on which program stream should be subjected to the deletion processing, and makes him or her set the boundary between an unnecessary portion of the program stream to be deleted and the other portion to be left.

For example, if the user has designated a content to edit on the editing mode screen, the editing control section **164** instructs the media control section **175** to read a program stream representing the content. When the decoder **171** decodes the program stream, the video signal output section **110** and the audio signal output section **112** output video and audio, respectively.

When the scene to select appears after the video and audio started to be output onto the editing mode screen, the user presses the enter button of a remote controller, for example. Then, the editing control section **164** can sense the user's selected point as the boundary between VOBU #(i-1) and VOBU #i within a single VOB. Suppose the user has instructed that every data before the boundary (i.e., the editing point) be deleted in this example. In this manner, the range **D** specified by the user as a deletion range is set.

Next, in Step **S82**, the editing control section **164** determines whether or not the editing point is located at the top of a cluster. If the answer is NO, the process jumps to Step **S83.** On the other hand, if the answer is YES, the process advances to Step **S87.**

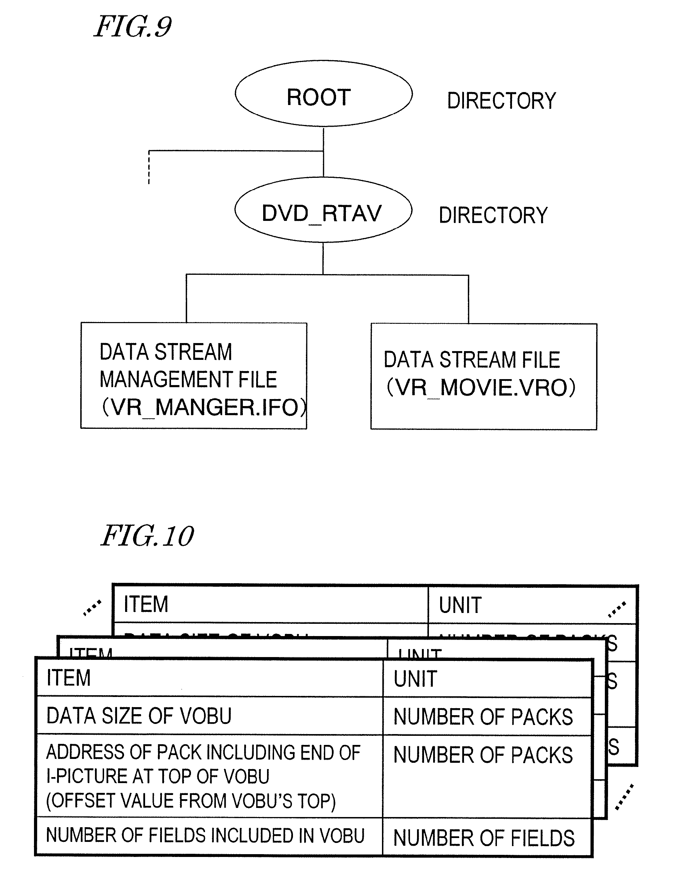

In Step **S83**, a video pack is read from just behind the deletion range. This video pack corresponds to Video Pack #3 (see FIGS. **3, 4** and **6**) in the example described above. It should be noted that the top addresses of respective VOBUs are stored in a management file on a program stream basis. That is why by reference to this management file, data can be easily retrieved from Video Pack #3 at the top of the VOBU. The management file will be described more fully later with reference to FIGS. **9** and **10.**

Next, in Step **S84,** the number of packs to delete is calculated on Cluster #J in which Video Pack #0 is stored. In the example described above, the number of packs to delete is two, namely, Video Pack #1 and Video Pack #2.

The number of packs may be calculated in the following manner. First, the editing control section **164** divides the address offset value (i.e., the difference) of VOBU #i from the top of the data stream file by the cluster size (of 32 kB, for example) and then further divides the remainder by 2,048 bytes. As a result, the number of packs can be figured out.

Thereafter, the editing control section **164** processes the video data of Video Pack #3 such that the video data can be divided and stored in the two packs, which have been deleted from Cluster #J, on the RAM **183** functioning as a work memory. That is to say, the editing control section **164** carries out video data division processing such that the video data that was stored in Video Pack #3 before the editing can be distributed in Video Packs #1 and #2, too, as shown in FIGS. **3(b)** and **7(a).**

It should be noted that the offset value of VOBU #i from the top of the data stream file is supposed to be calculable based on the information stored in the management file. For example, the offset value can be calculated by summing up the respective data sizes of VOBUs that are stored in the management file (see FIG. **10**).

Next, in Step **S85,** the editing control section **164** sets SCR values for the respective pack headers of Video Packs #1 and #2 on the RAM **183.** More specifically, by reference to the SCR value of Video Pack #3, the editing control section **164** sets an SCR value, which is earlier than that of Video Pack #3 by the time for transferring two pack data, for Video Pack #1 and sets an SCR value, which is earlier than that of Video Pack #3 by the time for transferring one pack data, for Video Pack #2. That is to say, the SCR values may be obtained by subtracting data transfer time for the two packs and data transfer time for the one pack from the SCR value of Video Pack #3.

Specifically, an SCR value corresponding to data transfer time for the one pack may be obtained by representing the time for transferring data with the pack data length (of 2,048 bytes) with respect to the program stream's data transfer rate (of 10.08 Mbps, for example) through a clock rate of 27 MHz. That is to say, the SCR value may be given by (2048×8/10.08×106)*27*106. The value representing the data transfer rate is described in the multiplex bit rate (Program Mux Rate) field of the pack header. Thus, the editing control section **164** may read that value from Video Pack #3 and use it to calculate the SCR value.

In Step **S86,** the editing control section **164** instructs the media control section **175** to store Video Packs #1, #2 and #3, which have been generated on the RAM **183,** in this order from the top of Cluster #J. The writing section **120** of the media control section **175** receives the newly generated Video Packs #1, #2 and #3 and writes them on Cluster #J of the memory card **130** from its top.

Next, in Step **S87,** the editing control section **164** updates the FAT information of the data stream. More specifically, the editing control section **164** instructs the media control section **175** to delete the FAT information representing the deleted portion of the program stream and redefine the FAT information such that the program stream (VOB) that has been subjected to the deletion editing processing starts at the top of Cluster #J.

It should be noted that if the process jumps from Step **S82** to Step **S87,** then every cluster that was located before the editing point has been deleted. In that case, the FAT information may be updated such that the cluster that followed the editing point becomes the first cluster.

Finally, in Step **S88,** the editing control section **164** modifies the management information of the program stream. The management information is stored as a management file in the memory card **130.**

More specifically, since the data sizes of VOBU #i and I-frame are described as the numbers of packs in the management information, the editing control section **164** increases those values by two packs. This is because as a result of the editing processing, a portion of the first video data of VOBU #i (i.e., the video data of the I-frame) has been divided and stored separately in Video Packs #1 and #2, thus making it necessary to update the management information. Also, since the portion preceding VOBU #(i-1) has been deleted, the editing control section **164** also deletes its associated management data.

FIG. **9** shows the hierarchical structure of the file system of the memory card **130.** A management file **VR_MANGER.IFO** and a data stream file **VR_MOVIE.VRO** are stored in DVD_RTAV directory under the root directory.

FIG. **10** shows an exemplary piece of management information for a program stream. The management information is generated on a VOBU-by-VOBU basis. It can be seen from FIG. **10** that management information is provided for each VOBU.

As the management information, the data size of each VOBU, the address offset value of a pack including the end of an I-picture at the top of the VOBU, and the number of video fields included in the VOBU are defined. As can be seen easily from FIG. **2,** if there are multiple VOBs, the same number of sets of the management information shown in FIG. **10** are provided for the VOBs.

By adopting such a technique, if a portion of a data stream to be deleted by the recorder **10** includes the top of a cluster, then the editing processing can be done just by processing the data of the data stream within the single cluster. As a result, the complexity of the editing processing can be reduced significantly and the editing processing can be done in a much shorter time compared to the situation where the remaining data is sequentially moved up and rearranged.

The preferred embodiment described above is data stream deletion processing. However, this is just an example and the present invention is also applicable for use in the processing of splitting a data stream. More specifically, if a splitting point is set halfway through a cluster, then packs included in the cluster, beginning with the pack just behind the splitting point, should be read and then written on another cluster. In that case, by using the video data of the pack just behind the splitting point, the packs may be arranged sequentially from the top of the cluster.

In the preferred embodiment described above, in a VOBU just behind the deletion range, the video data that has been stored in the first video pack is divided and then stored separately in top three video packs of a stream that have been generated by the editing processing. However, the present invention is in no way limited to this specific example (which will be referred to herein as a "first example" for convenience sake).

Alternatively, as a "second example", the processing described above may be carried out not on the VOBU just behind the deletion range but on the next VOBU. In that case, after the VOBU just behind the deletion range has been rearranged at the top of Cluster #J, the video data of the first video pack of the next VOBU needs to be distributed in multiple video packs. The SCR values need to be changed in the respective packs of the VOBU just behind the deletion range and in those packs of the next VOBU in which the video data has been distributed. The more distant from the top of the edited data stream the location of the pack storing the video data to be divided, the greater the number of packs that should have their SCR values changed.

Further alternatively, as a "third example", the first video pack may be moved as it is to the top of the cluster and the video data of one of the following video packs (e.g., the second video pack) may be divided and distributed in multiple video packs. In that case, the SCR values need to be changed in the first video pack that has been moved to the top of the cluster and in the packs in which the video data has been distributed.

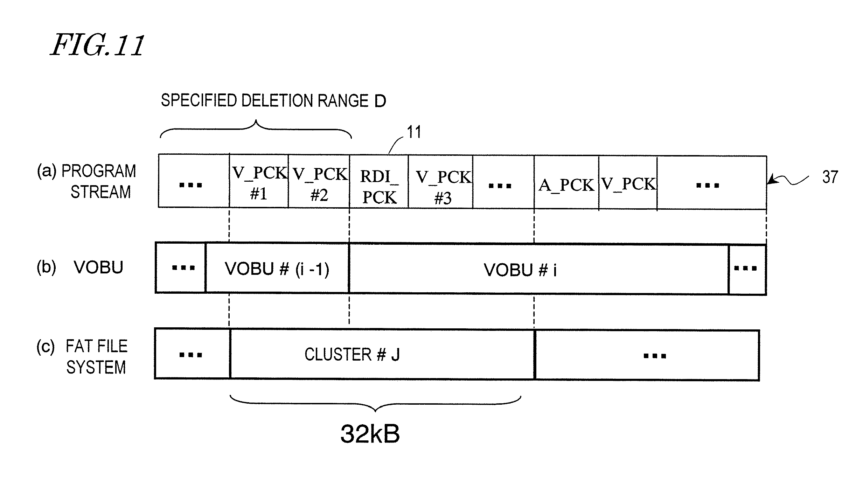

The processing in the third example is effective particularly if each VOBU of the program stream begins with a real time data information pack (RDI pack). FIG. **11** shows correspondence among the arrangement of packs in a program stream **37,** in which each VOBU begins with an RDI pack, the arrangement of VOBUs, and the arrangement of clusters in an FAT file system. It can be seen that the top of VOBU #i is an RDI pack (RDI_PCK) **11.**

Suppose the deletion range **D** has been specified as shown in FIG. **11** for such a program stream **37.** In that case, Video Packs #1 and #2 are deleted from the top of Cluster #J and VOBU #i, in which the RDI pack **11,** Video Pack #3 and other packs are arranged in this order, is left after the deletion editing as in the preferred embodiment described above.

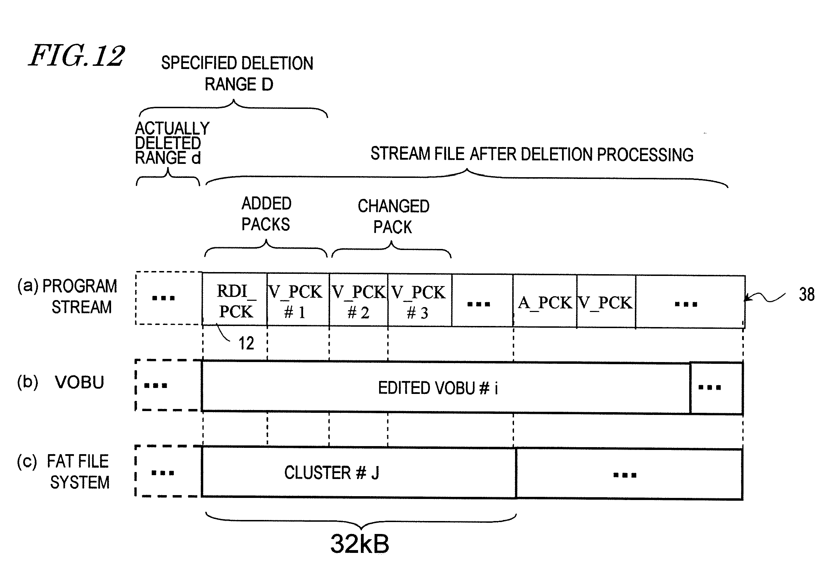

FIG. **12** shows correspondence among a program stream **38** that has been subjected to deletion editing processing, the arrangement of VOBUs, and the arrangement of clusters in an FAT file system. The recorder **10** may generate the program stream **38** shown in FIG. **12** in the following manner.

It should be noted that the processing to be described below is supposed to be carried out on the RAM **183** after the recorder **10** has read multiple packs from Cluster #J shown in FIG. **11.** The processing may be carried out before or after the data that precedes Cluster #J is actually deleted.

First, the editing control section **164** arranges the unedited RDI pack **11** as an RDI pack **12** in the storage area of the RAM **183.** This move may be done either by overwriting the RDI pack **12** on the former Video Pack #1 or by deleting Video Pack #1 once and then writing the RDI pack there. Furthermore, the move may be carried out in a different area from the area in which the data read from Cluster #J is stored.

Next, the editing control section **164** performs the same type of processing on the video data in Video Pack #3 shown in FIG. **11** as that performed on Video Pack #3 shown in FIG. **3.** As a result, the video data in Video Pack #3 is divided to generate three video packs. Then, the editing control section **164** sequentially arranges the three video packs generated after the RDI pack **12.** These video packs correspond to Video Packs #1 through #3 shown in FIG. **12.**

While generating or arranging the video packs, the editing control section **164** sets the SCR values in the pack headers of the respective packs. Specifically, the SCR value of the RDI pack **12** at the top is set smaller than that of the unedited RDI pack (see FIG. **11**) by the amount of time it takes to transfer two packs. Also, the SCR value of edited Video Pack #1 is set smaller than that of unedited Video Pack #3 (see FIG. **11**) by the amount of time it takes to transfer two packs, too. These values are respectively equal to those of unedited Video Packs #1 and #2. In the same way, the SCR value of edited Video Pack #2 becomes equal to that of unedited RDI pack (see FIG. **11**), and the SCR value of Video Pack #3 does not change even after the editing processing.

Thereafter, the editing control section **164** instructs the media control section 175 to write the RDI pack **12** and Video Packs #1 through #3 and so on in this order on the memory card **130** from the top of Cluster #J. The data of the packs that follow Video Pack #3 does not have to be changed. As a result, the program stream **38** shown in FIG. **12** is written on the memory card **130.**

The example described above is program stream front deletion processing, i.e., the processing of deleting every data that precedes the "editing point" shown in FIG. **8.** However, the applications of the present invention are not limited to the front deletion processing. Alternatively, the present invention is also applicable to the processing of deleting an intermediate portion of a data stream or the processing of splitting a single data stream into two at an editing point.

More specifically, in the processing of deleting an intermediate portion, the present invention may be applied to the top of the remaining portion of the data stream that should be left after the intermediate portion has been removed. Also, in the processing of splitting a single data stream, the present invention may be applied to the top of the latter half of the data stream behind the editing point. In either case, the data stored in the cluster, including the top portion data, may be subjected to the processing steps **S82** and so on shown in FIG. **8.**

To recapitulate the preferred embodiments and their modified examples described above, the processing to get done by the recorder **10** may be generalized as follows. Specifically, in a situation where a program stream, including content data, is stored in unit areas (clusters), the reading section **121** of the media control section **175** reads packs of the program stream on a cluster-by-cluster basis. Then, the editing control section **164** divides the content data, which is stored in at least one of (n+1)th through (n+m)th packets (where n and m are integers that are equal to or greater than one), and stores the divided data on the first through (n+ m)th packets. Thereafter, the writing section **120** of the media control section **175** writes multiple packets, including the first through (n+m)th packets, on the original cluster, thus getting the editing processing done in a much shorter time.

In the preferred embodiments described above, the memory card **130** is supposed to be removable. However, this is just an example. As long as the medium can be used to manage files by the file system described above, any other semiconductor storage medium (such as an FeRAM or an MRAM) or an optical disk such as a DVD-RAM, an MO, a DVD-R, a DVD-RW, a DVD+RW, a DVD+R, a CD-R or a CD-RW may also be used. The medium may even be a fixed, non-removable medium (such as a hard disk) that is built in the recorder **10.**

Also, in the preferred embodiments described above, an FAT file system is supposed to be adopted. However, any other file system may be adopted instead of the FAT file system as long as the storage area thereof can be defined as an integral number of times as large as a single pack size. For example, an UDF file system, in which a single logical block has a size of 32 kB, may also be adopted.

The respective functional blocks such as those shown in FIG. **1,** for example, are typically implemented as an LSI (large-scale integrated circuit) chip such as the CPU **181.** These functional blocks may be implemented as respective chips or may also be integrated together into a single chip either fully or just partially. In FIG. **1,** for example, the MPEG encoder **170** and the system control section **180** are shown as mutually different functional blocks. However, these blocks may be implemented either as two different semiconductor chips or as physically the same chip. Optionally, the functions of the system control section **180,** the MPEG encoder **170** and the MPEG decoder **171** may be integrated together into a single chip circuit. However, only the memory that stores the data to be encoded or decoded may be excluded from the blocks to be integrated together.

It should be noted that the LSI mentioned above is sometimes called an IC, a system LSI, a super LSI or an ultra LSI depending on the number of devices that are integrated together per unit area. The integrated circuit does not have to be an LSI but may also be implemented as a dedicated circuit or a general-purpose processor. Optionally, after an LSI has been fabricated, a programmable FPGA (field programmable gate array) or a reconfigurable processor in which the connection or setting of circuit cells inside the LSI are changeable may be adopted.

As another possibility, a novel integrated circuit technology to replace LSIs might be developed in the near future as a result of advancement of the semiconductor technology or any other related technology. In that case, the functional blocks could be integrated together by that novel technology. For example, the functional blocks could be integrated together as bio elements by utilizing some biotechnology.

In the preferred embodiments described above, the entire program stream (i.e., the overall VOB) is stored in a single data stream file. Alternatively, the program stream may be divided into multiple portions to be stored separately in a number of data stream files. Also, in the preferred embodiments described above, the entire management data about a data stream file is stored in a single management file. However, the management data may be divided into multiple portions that should be stored as management data files for a number of data files.

Furthermore, in the preferred embodiments described above, the data stream is supposed to be a program stream. Alternatively, the data stream may also be a bit stream including multimedia information such as a transport stream or a PES stream. Also, the video is supposed to be represented by an MPEG-2 video stream but may also be an MPEG-4 video stream or an MPEG-4 AVC stream. Likewise, the audio may also be a linear PCM audio stream or an AC-3 stream.

It should be noted that in performing subtraction processing on an SCR, it is necessary to make sure that the interval between the presentation time stamp (PTS) of the first picture to be presented in VOBU #i and the minimum SCR value is one second or less. However, the interval rarely, if ever, exceeds one second unless some special encoding is adopted on purpose. Rather, the MPEG encoder preferably performs its encoding such that the time interval between the PTS of the first picture to be presented in each VOBU and the top SCR of that VOBU does not exceed 0.9 seconds, for example.

### INDUSTRIAL APPLICABILITY

The data processor (recorder) of the present invention can simplify the front deletion processing or splitting processing on a recorded content and can get the editing processing done in a short time. This comes in handy for the user because he or she has to wait for a shorter time. In addition, since the power dissipated by the data processor can be reduced because the processor needs to operate for a decreased amount of time, the present invention is applicable particularly effectively to various battery driven devices, including mobile audiovisual appliances such as camcorders, among other things.

## Claims

1. A data processor operable to read and write content data from/on a storage medium on a unit area basis, a plurality of packets that stores the content data being recorded on the unit area, the data processor comprising:
a reading section operable to read the packets;
a control section operable to divide the content data, which is stored in (n┼1)th through (n+m)th packets (where n and m are integers that are equal to or greater than one), and storing the divided data on the first through (n+m)th packets; and
a writing section operable to write a plurality of packets, including the first through (n+m)th packets, on the unit area.

2. The data processor of claim 1, wherein the control section stores the divided content data on the first through (n┼m)th packets sequentially.

3. The data processor of claim 1, wherein the control section sequentially stores the divided content data on the second packet and so on, the second packet being next to the first packet.

4. The data processor of claim 3, wherein if the (n+ 1)th packet stores thereon management information for managing playback of a data stream, the control section stores the management information on the first packet.

5. The data processor of claim 1, wherein the length of each said packet is fixed at a predetermined length, and
wherein the control section stores not only the content data but also padding data, which is different from the content data, on the at least one packet, thereby adjusting the length of the at least one packet to the predetermined length.

6. The data processor of claim 5, wherein the control section stores the divided content data on at least two packets consisting of the first through (n┼m)th packets.

7. The data processor of claim 6, wherein the control section generates at least one packet that does not include the padding data and at least one packet that does include the padding data.

8. The data processor of claim 1, wherein each said packet stores time information showing time at which the packet is processed, and
wherein among the (n+1)th through (n+m)th packets, the control section gets the time information of a pth packet, which is the first packet that stores the content data (and where p is an integer that satisfies n+1≦p≦n+m), changes the time information to show another time at which a qth packet, which is the first packet that store the divided content data (and where q is an integer that satisfies 1≦q≦ p-1), is processed, and then stores the latter information on the qth packet.

9. The data processor of claim 8, wherein the length of each said packet is fixed at a predetermined length, and
wherein the control section changes the time information based on the number of packets between the pth and the qth packets and on a data rate of the data stream.

10. The data processor of claim 9, wherein each said packet stores rate information showing the data rate of the data stream, and
wherein the control section changes the time information based on the rate information in the pth packet.

11. The data processor of claim 11, wherein the control section changes the time information based on an amount of time it takes to transfer a single packet, which is determined based on the rate information, and the number of packets.
